Europäisches Patentamt

European Patent Office

Office européen des brevets

(11) Veröffentlichungsnummer: **0 216 343 B1**

# EUROPÄISCHE PATENTSCHRIFT

(45) Veröffentlichungstag der Patentschrift: **18.09.91**

(51) Int. Cl.5: **B32B 15/08**, B65D 65/40

(21) Anmeldenummer: **86113016.9**

(22) Anmeldetag: **22.09.86**

(54) **Kunststoffolien-Metallfolienverbund.**

(30) Priorität: **27.09.85 DE 3534399**

(43) Veröffentlichungstag der Anmeldung:
**01.04.87 Patentblatt 87/14**

(45) Bekanntmachung des Hinweises auf die
Patenterteilung:
**18.09.91 Patentblatt 91/38**

(84) Benannte Vertragsstaaten:
**BE DE FR GB IT NL**

(56) Entgegenhaltungen:
**EP-A- 0 177 872**
**FR-A- 2 505 251**
**US-A- 3 894 904**

(73) Patentinhaber: **HOECHST AKTIENGESELL-
SCHAFT**
**Postfach 80 03 20**
**W-6230 Frankfurt am Main 80(DE)**

(72) Erfinder: **Janocha, Siegfried, Dr. Dipl.-Chem.**
**Weinfeldenstrasse 28**
**W-6200 Wiesbaden(DE)**
Erfinder: **Schlögl, Gunter, Dr. Dipl.-Phys.**
**Finkenweg 2**
**W-6233 Kelkheim(DE)**
Erfinder: **Crass, Günther**
**Bachstrasse 7**
**W-6204 Taunusstein-Hahn(DE)**
Erfinder: **Bothe, Lothar, Dr. Dipl.-Chem.**
**Am Heiligenhaus 9**
**W-6500 Mainz(DE)**

## Beschreibung

Die Erfindung betrifft einen Kunststoffolien-Metallfolienverbund für die Verpackung von fetthaltigen Substanzen, bestehend aus einer koextrudierten, mehrschichtigen, biaxial gestreckten opaken Polypropylenfolie.

Aus der DE-AS 28 14 311 sind derartige mehrschichtige, koextrudierte, biaxial gestreckte, opake Polypropylenfolien bekannt, deren Basisschicht im wesentlichen aus Polypropylen und Füllstoffen besteht. Die Opazität dieser Folien resultiert daher, daß sie eine große Anzahl von Hohlräumen (Vakuolen) besitzen, die beim Strecken der koextrudierten Folie entstanden sind. Beim Streckvorgang wird die Polymermatrix an den Korngrenzen der mit dem Polypropylen unverträglichen organischen oder anorganischen Füllstoffe aufgerissen, was zur Entstehung der genannten Vakuolen in der Folie, d.h. zu Hohlräumen in der Folie führt. Es versteht sich von selbst, daß diese Vakuolen oder Mikrohohlräume über das ganze Folienvolumen verteilt sind. Infolge der Beugung des Lichtes beim Übergang vom optisch dichteren Folienmaterial in die optisch dünneren Hohlräume zeigt die Folie eine opake Oberfläche, die ihr einen perlmuttartigen Glanz verleiht. Aufgrund der opaken oder perlmuttartigen Erscheinung besitzen diese Folien ein äußerst werbewirksames Aussehen. Da sie auch gut bedruckbar sind, werden sie vielseitig eingesetzt, insbesondere als Verpackungsfolien für die verschiedensten Anwendungszwecke, wobei vor allem die Schokoriegel-Verpackung zu nennen ist. Einer noch breiteren Verwendung der bekannten koextrudierten und biaxial gestreckten, opaken Polypropylen-Mehrschichtfolien stand bisher insbesondere ihr Nachteil entgegen, däß ihre Dichte noch immer relativ hoch ist, wodurch sie eine schlechte Knick- und Faltbarkeit aufweisen, die sie für verschiedene Verpackungszwecke wenig geeignet machen. Insbesondere bei der Verpackung von fetthaltigen Lebensmitteln wie Butter, hochwertiger Margarine und dgl. Fetten werden Verpackungsmaterialien bevorzugt, die gute Knickbarkeit und Faltbarkeit und ein metallisches, silber- oder goldähnliches Aussehen besitzen.

In der Druckschrift FR-A 2.505.251 ist ein Verbund aus einer Monokunststoffolie und einer Metallfolie beschrieben. Es handelt sich bei der Kunststoffolie um eine biaxial gestreckte Monofolie aus einem Polymeren oder Copolymeren eines $\alpha$-Olefins, wie z.B. Propylen und Ethylen, mit im wesentlichen statistischer Verteilung des Comonomeren. Die Metallfolie des Verbundes ist eine Aluminiumfolie.

Aufgabe der Erfindung ist es, einen KunststoffolienMetallfolienverbund für die Verpackung von fetthaltigen Lebensmitteln wie Butter, hochwertige Margarine u.dgl. zur Verfügung zu stellen, bei dem die Kunststoffolie des Verbundes gegenüber bisher bekannten Mehrschicht-Polypropylenfolien für diese Zwecke eine wesentlich erhöhte Falt- und Knickbarkeit aufweist und der Verbund ein metallisch glänzendes Aussehen besitzt.

Diese Aufgabe wird erfindungsgemäß dadurch gelöst, daß die Dichte der Polypropylenfolie maximal 0,60 g/cm³ beträgt, die eine Basisschicht aus Polypropylen und Füllstoffen mit einer Teilchengröße von 2 bis 5 $\mu$m aufweist, daß die Menge an Füllstoff, bezogen auf Polypropylen, 10 bis 30 Gew.% beträgt und daß die Polypropylenfolie ein- oder beidseitig mit Siegelschichten ausgerüstet ist und einseitig mit einer Metallfolie zu dem Verbund zusammengefügt ist.

Die Dicke des Verbundes beträgt 20 bis 100 $\mu$m, insbesondere 40 bis 80 $\mu$m. Die Metallfolie weist eine Dicke von 5 bis 50 $\mu$m, bevorzugt von 8 bis 25 $\mu$m auf.

In Ausgestaltung der Erfindung liegt die Dichte der Polypropylenfolie im Bereich von 0,40 bis 0,60 g/cm³. Zweckmäßigerweise sind die Kunststoffolie und die Metallfolie miteinander klebekaschiert, sie können jedoch auch durch Prägen miteinander verbunden sein.

Der Verbund nach der Erfindung wird zum Verpacken hochwertiger Fette wie Butter verwendet. Insbesondere wird die Verwendung des Verbundes zur Substitution von Stanniolpapier als Verpackungsmaterial verwendet.

Die durch Koextrusion hergestellte, ein- oder beidseitig beschichtete und nacheinander in Längsrichtung bei einer Temperatur von 120 bis 130 °C und in Querrichtung bei einer Temperatur von 160 bis 170 °C gestreckte opake Polypropylenfolie hat eine Basisschicht, die im wesentlichen aus Polypropylen und Füllstoffen besteht. Die Menge an Füllstoff, bezogen auf Polypropylen, beträgt dabei 10 bis 30 Gew.-%. Der eingesetzte Füllstoff hat eine Teilchengröße von 2 bis 5 $\mu$m, und die Folie ist um das 5- bis 7fache längsgestreckt und um das 8-bis 10fache quergestreckt, so daß sie eine Dichte von maximal 0,60 g/cm³ aufweist. Eine Folie dieser Art ist aus der älteren europäischen Anmeldung EP-A - 0 177 872 bekannt. Die Folie enthält eine relativ große Menge an Füllstoff. Überraschend ist dabei, daß die Erhöhung der Füllstoffmenge zu der angestrebten Absenkung der Dichte beiträgt, nachdem sich durch diese Maßnahme nicht nur die Dichte der Polypropylen-Füllstoffmischung, aus der die Folie hergestellt wird, sondern auch der Grad der Dichteerniedrigung, das ist der prozentuale Unterschied der Dichtewerte der Polypropylen-Füllstoffmischung und der fertigen Folie, der üblicherweise bei 20 bis 40 % liegt, deutlich erhöht.

Bei der relativ großen Menge an Füllstoff war zu erwarten, daß eine Polypropylenfolie mit einem auf Kosten des Polymeranteils relativ hohen Füllstoffgehalt, wenn überhaupt, nur mit Schwierigkeiten herstellbar und insbesondere biaxial streckbar sein werde. Entgegen dieser Erwartung läßt sich die Folie jedoch überraschenderweise leicht herstellen und auch biaxial strecken. Ist die Füllstoffmenge kleiner als 10 Gew.-%, bezogen auf Polypropylen, so wird die angestrebte niedrige Dichte nicht erreicht. Ist sie andererseits größer als 30 Gew.-%, kann die Folie bei den genannten Bedingungen nicht mehr gestreckt werden. Analoges gilt auch für die Teilchengröße des pulverförmigen Füllstoffes. Neben der Füllstoffmenge und der Füllstoff-Teilchengröße müssen auch die Längs- und Querstreck-Verhältnisse im angegebenen Bereich liegen, damit die angestrebte Folie erhalten wird. Weitere Einzelheiten der Polypropylenfolie des Verbundes ergeben sich aus der deutschen Patentanmeldung 34 36 961.9, in der auch das Verfahren zur Herstellung dieser Polypropylenfolie näher beschrieben ist. Für die Herstellung wird die Schmelze der die Basisschicht bildenden Polymermischung aus im wesentlichen Polypropylen und Füllstoff, wobei die Menge an Füllstoff, bezogen auf Polypropylen, 10 bis 30 Gew.-% beträgt, vorzugsweise 15 bis 25 Gew.-%, und der eingesetzte Füllstoff eine Teilchengröße von 2 bis 5 $\mu$m, vorzugsweise 3 bis 4 $\mu$m, hat, und die Schmelze des die Schichten bildenden Polymeren durch eine Flachdüse oder Runddüse koextrudiert, die durch Koextrusion erhaltene Folie durch Abkühlen verfestigt, anschließend bei einer Temperatur von 120 bis 130 °C im Verhältnis von 5 bis 7:1 längsgestreckt und bei einer Temperatur von 160 bis 170 °C im Verhältnis von 8 bis 10:1 quergestreckt und die biaxial gestreckte Folie thermofixiert.

Das Polypropylen der Basisschicht kann ein Homo- oder Copolymerisat des Propylens oder eine Mischung aus Propylen-Homo- und Propylen-Copolymerisaten sein. In den Copolymerisaten beträgt die Comonomermenge im allgemeinen maximal 10 Gew.-%, bezogen auf das Copolymerisat. Bevorzugte Comonomere sind Ethylen und Buten-(1).

Bei den Füllstoffen handelt es sich um die üblichen anorganischen oder organischen, mit Polypropylen unverträglichen, pulverförmigen Materialien. Anorganische Füllstoffe sind bevorzugt. Geeignete anorganische Füllstoffe sind Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und/oder Titandioxid, worunter Calciumcarbonat, Siliciumdioxid, Titandioxid oder Mischungen davon bevorzugt eingesetzt werden. Calciumcarbonat (Kreide) ist besonders bevorzugt. Die Füllstoffmenge beträgt erfindungsgemäß 10 bis 30 Gew.-%, vorzugsweise 15 bis 25 Gew.-%, bezogen auf das Gewicht des vorhandenen Polypropylens. Die (mittlere Teilchengröße des pulverförmigen Füllstoffes liegt erfindungsgemäß im Bereich von 2 bis 5 $\mu$m, vorzugsweise im Bereich von 3 bis 4 $\mu$m. Die Basisfolie (Basisschicht) kann auch zweckmäßige Additive wie Antioxidantien, Antistatika, Farbstoffe und/oder Stabilisatoren in einer jeweils wirksamen Menge enthalten.

Bei den Deckschichten handelt es sich in der Regel um heiß- oder kaltsiegelfähige Schichten. Es kann sich auch um nicht-siegelbare Schichten handeln. Alle diese Schichten können ein- oder beidseitig vorliegen. Die Heißsiegelschicht besteht vorzugsweise aus einem Ethylen-Homopolymerisat (Polyethylen hoher Dichte oder Polyethylen niedriger Dichte), einem Copolymerisat aus Propylen als Hauptkomponente und Ethylen, vorzugsweise in einer Menge von maximal 10 Gew.-% (bezogen auf das Copolymerisat), einem Copolymerisat aus Propylen als Hauptkomponente und Buten-(1), vorzugsweise in einer Menge von 10 bis 15 Gew.% (bezogen auf das Copolymerisat), einem Terpolymerisat aus Propylen, Ethylen und einem $\alpha$-Olefin mit 4 bis 10 Kohlenstoffatomen, vorzugsweise einem solchen aus 93,2 bis 99,0 Gew.-% Propylen, 0,5 bis 1,9 Gew.-% Ethylen und 0,5 bis 4,9 Gew.-% eines $\alpha$-Olefins mit 4 bis 10 Kohlenstoffatomen, oder aus einer Mischung dieser Polymeren. Die Comonomeren sind in den Polymerisaten im wesentlichen statistisch verteilt (vgl. deutsche Auslegeschrift 28 14 311). Geeignete Kaltsiegelschichten bestehen aus Polymerisaten auf der Basis von natürlichem oder synthetischem Kautschuk. Die nichtsiegelbare Deckschicht besteht vorzugsweise aus einem entsprechenden Propylen-Homopolymerisat.

Die Dicke der Heißsiegelschicht beträgt 0,1 bis 10 $\mu$m, vorzugsweise 0,5 bis 2 $\mu$m. Die Kaltsiegelschicht und die nicht-siegelbare Schicht weisen in der Regel ebenfalls eine solche Dicke auf.

Zum biaxialen Strecken der Folie kann zuerst in Längsrichtung und anschließend in Querrichtung oder zuerst in Querrichtung und dann in Längsrichtung gestreckt werden. Wesentlich ist, daß die Längs- und Querstreckung nacheinander und bei den angegebenen ausgewählten Temperaturen und Streckverhältnissen vorgenommen werden. Die Koextrusion der die Basisschicht bildenden Mischung und des die Deckschicht bildenden Polymeren mittels einer Flachdüse, das Abkühlen der koextrudierten Folie zu ihrer Verfestigung, das Wiedererhitzen der Folie auf die Strecktemperatur und die Längs- und Querstreckung werden in an sich bekannter Weise durchgeführt (vgl. deutsche Auslegeschrift 28 14 311). Das Abkühlen der Flachfolie zwecks Verfestigung und ihr Wiedererhitzen auf Strecktemperatur wird man mit Hilfe einer oder mehrerer Walzen vornehmen, die auf einer entsprechenden Temperatur gehalten werden. Die Längsstreckung der Folie wird man mit Hilfe zweier entsprechend dem angestrebten Streckverhältnis verschieden schnell laufender Walzenpaare durchführen und ihre Querstreckung mit Hilfe eines entsprechenden Kluppenrahmens. Es ist zweckmäßig, die Folie nach der ersten Streckung abzukühlen und auf dem Weg zur zweiten Streckung wieder auf die erforderliche Strecktemperatur zu bringen.

An die Streckung der Folie schließt sich ihre Thermofixierung (Wärmebehandlung) an. Auch diese wird in an sich bekannter Weise vorgenommen, nämlich bei einer Temperatur von vorzugsweise 150 bis 160 °C (etwa 0,5 bis 10 Sekunden lang).

Im folgenden sind zwei Beispiele für die Polypropylenfolie näher beschrieben.

Beispiel 1

Es wurde eine Polypropylenfolie mit beidseitig vorhandenen heißsiegelfähigen Deckschichten bei etwa 270 °C durch eine Flachdüse koextrudiert. Die Mischung (Schmelze) der die Basisschicht bildenden Folie bestand aus 80 Gew.-% Propylen-Homopolymerisat und 10 Gew.-% pulverförmigem Calciumcarbonat mit einer mittleren Teilchengröße von 3,8 $\mu$m. Die Schmelze des die Deckschichten bildenden Polymeren bestand aus einem statistischen Copolymerisat von Propylen und 4 Gew.-% Ethylen. Nach dem Abkühlen der koextrudierten Folie mit einer Kühlwalze auf etwa 30 °C wurde die Folie bei 125 °C in Längsrichtung, Streckverhältnis 6,0, und dann bei 165 °C in Querrichtung, Streckverhältnis 9,0, gestreckt. Die anschließende Thermofixierung erfolgte bei 160 °C 5 Sekunden lang.

Die so erhaltene opake Polypropylen-Mehrschichtfolie hatte eine Dichte von 0,46 g/cm³ und eine Dicke von 35 $\mu$m, die Dicke der Heißsiegelschichten betrug jeweils 1 $\mu$m.

Beispiel 2

Es wurde eine Polypropylenfolie mit beidseitig vorhandenen heißsiegelfähigen Deckschichten bei etwa 270 °C durch eine Flachdüse koextrudiert. Die Schmelze der die Basisschicht bildenden Folie bestand aus 75 Gew.-% Propylen-Homopolymerisat und 25 Gew.-% pulverförmigem Calciumcarbonat mit einer mittleren Teilchengröße von 3,2 $\mu$m. Die Schmelze des die Deckschichten bildenden Polymeren bestand aus dem in Beispiel 1 genannten Copolymerisat. Es wurde wie in Beispiel 1 vorgegangen, mit dem Unterschied, daß die Längsstreckung mit einem Streckverhältnis von 6,8 und die Querstreckung mit einem Streckverhältnis von 8,5 durchgeführt wurde.

Die so erhaltene opake Polypropylen-Mehrschichtfolie hatte eine Dichte von 0,42 g/cm³ und eine Dicke von 50 $\mu$m, die Dicke der Heißsiegelschichten betrug jeweils 1 $\mu$m.

Auf die gemäß den Beispielen 1 und 2 erhaltene opake, mehrschichtige Polypropylenfolie wurde einseitig mittels eines Klebers eine Metallfolie aufkaschiert. Bei dieser Metallfolie handelt es sich bevorzugt um eine Aluminiumfolie, die eine Dicke von 5 bis 50 $\mu$m besitzt. Insbesondere beträgt die Dicke der Metallfolie 8 bis 25 $\mu$m. Mit den in den Beispielen 1 und 2 angegebenen Dicken der opaken Mehrschicht-Polypropylenfolie ergeben sich dann Dicken des Verbundes im Bereich von 43 bis 75 $\mu$m. Bevorzugt ist eine Dicke des Verbundes im Bereich von 40 bis 80 $\mu$m, wobei jedoch nach unten und nach oben hin die Dicke des Verbunds 20 bis 100 $\mu$m betragen kann.

Der beschriebene Kunststoffolien-Metallfolienverbund besitzt hervorragende Knick-und Falteigenschaften, die ihn insbesondere für die Substitution von Stanniolpapier als Verpackungsmaterial und da wiederum zum Verpacken hochwertiger Fette wie Butter, Margarine, Kokosfette u.dgl. geeignet macht.

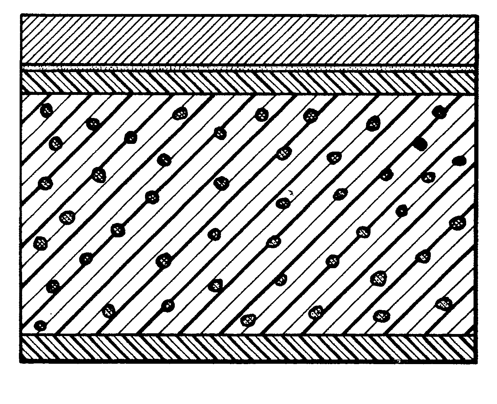

In der beigefügten einzigen Zeichnung ist schematisch ein Querschnitt durch den erfindungsgemäßen Kunststoffolien-Metallfolienverbund gezeigt. Die opake Polypropylenfolie als Basisfolie ist beidseitig mit Deckschichten heißversiegelt, wobei in der Basisschicht die Füllstoffe schematisch angedeutet sind. Auf der oberen Deckschicht befindet sich der Kleber für die einseitig aufkaschierte Aluminiumfolie.

Obgleich dies nicht dargestellt ist, können die mehrschichtige Polypropylenfolie und die Aluminumfolie miteinander auch durch Prägen verbunden werden.

**Patentansprüche**

1. Kunststoffolien-Metallfolienverbund für die Verpackung von fetthaltigen Substanzen, bestehend aus einer koextrudierten mehrschichtigen, biaxial gestreckten opaken Polypropylenfolie, dadurch gekennzeichnet, daß die Dichte der Polypropylenfolie maximal 0,60 g/cm³ beträgt, die eine Basisschicht aus Polypropylen und Füllstoffen mit einer Teilchengröße von 2 bis 5 $\mu$m aufweist, daß die Menge an Füllstoff, bezogen auf Polypropylen, 10 bis 30 Gew.% beträgt und daß die Polypropylenfolie ein- oder beidseitig mit Siegelschichten ausgerüstet ist und einseitig mit einer Metallfolie zu dem Verbund zusammengefügt ist.

2. Kunststoffolien-Metallfolienverbund nach Anspruch 1, dadurch gekennzeichnet, daß die Dicke des Verbunds 20 bis 100 $\mu$m beträgt.

3. Kunststoffolien-Metallfolienverbund nach Anspruch 2, dadurch gekennzeichnet, daß die Dicke des Verbunds 40 bis 80 $\mu$m beträgt.

4. Kunststoffolien-Metallfolienverbund nach Anspruch 1, dadurch gekennzeichnet, daß die Metallfolie eine Dicke von 5 bis 50 $\mu$m aufweist.

5. Kunststoffolien-Metallfolienverbund nach Anspruch 4, dadurch gekennzeichnet, daß die Dicke der Metallfolie 8 bis 25 $\mu$m ist.

6. Kunststoffolien-Metallfolienverbund nach Anspruch 1, dadurch gekennzeichnet, daß die Dichte der Polypropylenfolie im Bereich von 0,40 bis 0,60 g/cm$^3$ liegt.

7. Kunststoffolien-Metallfolienverbund nach den Ansprüchen 1 bis 6, dadurch gekennzeichnet, daß die Kunststoffolie und die Metallfolie miteinander klebekaschiert sind.

8. Kunststoffolien-Metallfolienverbund nach den Ansprüchen 1 bis 6, dadurch gekennzeichnet, daß die Kunststoffolie und die Metallfolie miteinander durch Prägen verbunden sind.

9. Verwendung des Verbundes nach Anspruch 7 oder 8 zum Verpacken hochwertiger Fette wie Butter.

**Claims**

1. Plastic film/metal foil composite for packaging fat-containing substances, comprising a coextruded multilayer, biaxially oriented, opaque polypropylene film, characterised in that the maximum density of the polypropylene film is 0.60 g/cm$^3$, the polypropylene film has a base layer comprising polypropylene and fillers having a particle size of from 2 to 5 $\mu$m, the amount of filler, based on polypropylene, is from 10 to 30 % by weight, and the polypropylene film is provided on one or both sides with heat-sealing layers and is bonded on one side to a metal foil to form the composite.

2. Plastic film/metal foil composite according to Claim 1, characterised in that the thickness of the composite is from 20 to 100 $\mu$m.

3. Plastic film/metal foil composite according to Claim 2, characterised in that the thickness of the composite is from 40 to 80 $\mu$m.

4. Plastic film/metal foil composite according to Claim 1, characterised in that the metal foil has a thickness of from 5 to 50 $\mu$m.

5. Plastic film/metal foil composite according to Claim 4, characterised in that the thickness of the metal foil is from 8 to 25 $\mu$m.

6. Plastic film/metal foil composite according to Claim 1, characterised in that the density of the polypropylene film is in the range from 0.40 to 0.60 g/cm$^3$.

7. Plastic film/metal foil composite according to Claims 1 to 6, characterised in that the plastic film and the metal foil are adhesive-laminated to one another.

8. Plastic film/metal foil composite according to Claims 1 to 6, characterised in that the plastic film and the metal foil are bonded to one another by embossing.

9. Use of the composite according to Claim 7 or 8 for packaging high-quality fats such as butter.

**Revendications**

1. Composite pellicule de matière plastique-feuille de métal pour l'emballage de substances contenant des graisses, à base d'une pellicule de polypropylène opaque coextrudée, multicouche, étirée biaxialement, caractérisé en ce que la densité de la pellicule de polypropylène est au maximum de 0,60 g/cm$^3$, pellicule qui comporte une couche de base constituée de polypropylène et de charges ayant une taille de particules de 2 à 5 $\mu$m, en ce que la quantité de charge, par rapport au polypropylène, va de 10 à 30 % en poids et en ce que la pellicule de polypropylène est pourvue sur un côté ou sur les deux de couches de soudure, et, sur un côté, est jointe avec une feuille de métal pour donner le composite.

2. Composite pellicule de matière plastique-feuille de métal selon la revendication 1, caractérisé en ce que l'épaisseur du composite va de 20 à 100 $\mu$m.

3. Composite pellicule de matière plastique-feuille de métal selon la revendication 2, caractérisé en ce que l'épaisseur du composite va de 40 à 80 $\mu$m.

4. Composite pellicule de matière plastique-feuille de métal selon la revendication 1, caractérisé en ce que la feuille de métal présente une épaisseur de 5 à 50 μm.

5. Composite pellicule de matière plastique-feuille de métal selon la revendication 4, caractérisé en ce que l'épaisseur de la feuille de métal va de 8 à 25 μm.

6. Composite pellicule de matière plastique-feuille de métal selon la revendication 1, caractérisé en ce que la densité de la pellicule de polypropylène se situe dans la plage de 0,40 à 0,60 g/cm³.

7. Composite pellicule de matière plastique-feuille de métal selon les revendications 1 à 6, caractérisé en ce que la pellicule de matière plastique et la feuille de métal sont contrecollées l'une avec l'autre.

8. Composite pellicule de matière plastique-feuille de métal selon les revendications 1 à 6, caractérisé en ce que la pellicule de matière plastique et la feuille de métal sont assemblées par gaufrage.

9. Utilisation du composite selon la revendication 7 ou 8, pour le conditionnement de matières grasses telles que le beurre.